# FASCICULE DE BREVET EUROPEEN

(11) **EP 3 436 296 B1**
(45) Date de publication et mention de la délivrance du brevet: **29.04.2020**
(21) Numéro de dépôt: 17710590.5
(22) Date de dépôt: 15.02.2017
(51) Int. Cl.: B60H 1/00, F04D 25/08, F04D 29/58, F04D 29/62, H05K 7/20

(54) **SYSTÈME POUR DISPOSITIF DE CHAUFFAGE, DE VENTILATION OU DE CLIMATISATION D'UN VÉHICULE**
SYSTEM FÜR HEIZUNGS-, LÜFTUNGS- ODER KLIMAANLAGENVORRICHTUNG EINES KRAFTFAHRZEUGS
SYSTEM FOR A HEATING, VENTILATION OR AIR-CONDITIONING DEVICE OF A VEHICLE

(30) Priorité: 29.03.2016 FR 1652677
(43) Date de publication de la demande: 06.02.2019
(73) Titulaire: Valeo Systemes Thermiques, 78320 Le Mesnil Saint Denis (FR)
(72) Inventeur: SEDDAR, Nacim, 78760 JOUARS PONTCHARTRAIN (FR); LE SUEUR, Paul, 91190 GIF-SUR-YVETTE (FR)
(74) Mandataire: Tran, Chi-Hai
(86) Numéro de dépôt international: PCT/FR2017/050340
(87) Numéro de publication internationale: WO 2017/168062

(56) Documents cités:
- WO-A1-03/038285
- WO-A1-2018/134516
- FR-A1- 2 741 842
- FR-A1- 2 877 419
- US-A1- 2011 229 349

## Description

La présente invention concerne le domaine des chauffages, des ventilations et de la climatisation (ou HVAC pour « *Heating, Ventilation and Air-Conditioning»* en anglais) dans les voitures, et en particulier le domaine de la fixation des modules, par exemple, de largeur d'impulsions (ou modules PWM pour « *Pulse Width Modulation »* en anglais) pour contrôler les moteurs de ces dispositifs dits HVAC.

Classiquement (même si cela n'est pas forcément toujours le cas), le moteur entrainant la roue de ventilation est fixé au centre de la volute du dispositif dit HVAC. Cette fixation est souvent réalisée via une pièce en matière synthétique entourant le moteur et appelée « support moteur ».

Un capot moteur, réalisé par exemple dans la même matière, peut protéger ce moteur.

La volute permet d'accélérer, et de diriger l'air accéléré vers une sortie d'air pour une utilisation dans le dispositif dit HVAC. Le moteur utilisé est souvent un moteur à courant continu dit moteur DC.

Afin de commander ce moteur DC, un module de commande (ex. module PWM pour « *Pulse Width Modulation »* en anglais) est souvent installé sur ou à proximité du support moteur.

Par ailleurs, les supports-moteurs des dispositifs dits HVAC peuvent être fixés par vissage à la volute.

Néanmoins, dans le cadre d'une démarche de réduction de coût et de simplification du montage sur les chaines de montage, il est souvent souhaité de pouvoir fixer sans vis, le moteur et son support moteur dans un dispositif de ventilation, chauffage et/ou climatisation (également appelé HVAC en langue anglaise).

Une solution possible est de prévoir un logement sensiblement circulaire dans la volute pour pouvoir insérer le support moteur et le moteur : une fois ceux-ci insérés, une rotation du support moteur peut permettre d'engager des crans d'attache (ou baïonnettes) du support moteur dans des ouvertures analogues de la volute. On appelle ce système d'attache un système « quart de tour ».

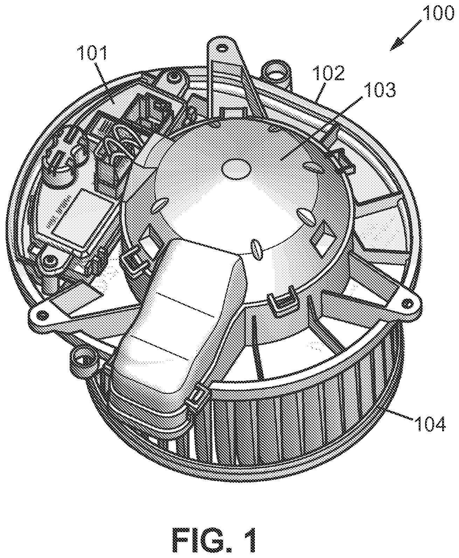

Concernant les modules de commande, et afin garantir un refroidissement adéquat, ils peuvent classiquement être montés :
- au niveau de l'entrée d'air du dispositif HVAC :
   - Cette solution est néanmoins peu optimale, car elle impose une longueur de faisceau importante afin de connecter le module et le moteur.
   - La longueur importante du faisceau peut alors dégrader directement la compatibilité électromagnétique des signaux de commandes du moteur et donc réduire considérablement le rendement du module.
- dans la volute :
   - La présence des modules de commande dans la volute peut dégrader fortement les performances acoustiques et aérauliques du dispositif HVAC ;
   - La fixation des modules de commande peut être réalisée sur le support moteur, mais le plus souvent, du fait des contraintes de place (i.e. faute de surfaces disponibles), le logement dans la volute pour la réception du bloc moteur n'est pas circulaire et un système de blocage « quart de tour » est alors impossible. Par exemple, un tel système est illustré par la figure 1 : la présence du module de commande 101 sur le support moteur 102 ne permet pas d'avoir un support moteur circulaire. Il est ainsi impossible de fixer ce système par une rotation du support moteur 102 autour de l'axe moteur 103 et de l'axe de la roue 104.
Des dispositifs similaires sont divulgués par US2011/0229349 et FR2877419.

Il y a ainsi un besoin pour proposer un système de fixation pour le module de commande permettant la mise en œuvre d'un système de blocage « quart de tour », tout en limitant la longueur du faisceau reliant le module PWM au moteur.

La présente invention vient améliorer la situation.

À cet effet, la présente invention propose un système pour dispositif de chauffage, de ventilation ou de climatisation d'un véhicule comportant :
- un moteur électrique ;
- un support-moteur fixé au moteur, ledit support-moteur étant apte à être installé dans une ouverture formée sur une volute du dispositif de chauffage, de ventilation ou de climatisation ;
- un module de commande dudit moteur électrique ;

Le module de commande est installé sur le support-moteur dans un logement, ledit logement étant formé entre une bague dudit support-moteur entourant le moteur et une surface d'appui dudit support moteur reliée à la bague et adaptée pour être en contact avec la volute, dans lequel une direction principale dudit module de commande est colinéaire à un axe de rotation du moteur, la direction principale du module de commande est une direction orientée selon la plus grande dimension du module de commande.

Le système de l'invention peut également comprendre, en cas de besoin, la volute.

Un tel système permet d'installer le module de commande dans un renfoncement entre la bague du support moteur et la surface d'appui. Ainsi :
- le fait que le module soit monté sur le support moteur permet que le module de commande soit à proximité du moteur et que la longueur du faisceau reliant le moteur au module de commande puisse être limitée ;
- le fait que le module se situe entre la bague et la surface d'appui permet d'assurer un refroidissement efficace du module : le module sera ainsi à proximité de la partie du support moteur situé dans la volute du dispositif HVAC.

L'ouverture peut, par exemple, être sensiblement circulaire et ainsi permettre au support moteur d'effectuer une rotation partielle une fois installé dans la volute et ainsi permet un blocage dit « quart de tour » du support moteur sur la volute. Bien entendu, d'autres formes de l'ouverture sont possibles du moment qu'elles permettent une rotation partielle du support moteur.

Un tel dispositif permet alors un montage simplifié sur les chaines de montage en usine puisque le support moteur peut être livré avec le module de commande déjà installé (ce qui ne serait pas possible si le module de commande devait se fixer sur une pièce distincte du support moteur) et le support moteur peut être fixé sans vis, par un système de baïonnettes par exemple.

Dans un mode de réalisation particulier, le logement peut comprendre une surface plane complémentaire d'une surface arrière du module, la surface plane étant située du côté opposé à la surface d'appui (par rapport au logement).

Ainsi, il est possible d'utiliser, pour le module de commande, une carte ou un circuit imprimé rigide, dont les coûts de fabrication sont réduits.

Par ailleurs, cette carte ou ce circuit imprimé peut être disposé(e) du côté de la surface arrière du module de commande afin de maximiser sa surface.

La surface plane peut être perpendiculaire à la surface d'appui.

En outre, la surface d'appui peut être adaptée pour être en contact avec la volute tout autour de l'ouverture.

Ce contact peut alors être circulaire ou tout du moins sensiblement circulaire.

Ainsi le support moteur peut rendre étanche la volute au regard de cette ouverture.

Dans un mode de réalisation, le support moteur peut comprendre des baïonnettes aptes à solidariser le support moteur avec la volute lors d'une rotation du support moteur dans ladite ouverture.

Ainsi, le système de fixation du support moteur peut être un système dit « quart de tour », évitant ainsi l'usage de vis et facilitant le montage.

Avantageusement, le logement a une section complémentaire d'une section du module de commande.

Ainsi, il est possible de venir insérer le module dans ce logement tout en assurant un maintien du module en place. Le montage en est alors simplifié.

Par ailleurs, le support moteur peut comprendre une ouverture en regard du logement apte à permettre une circulation d'air entre un intérieur de la volute et ledit logement.

Cette ouverture peut être réalisée à tout endroit dans le logement. Avantageusement, cette ouverture se situe à un endroit du logement à proximité de la circulation d'air de la volute (ex. l'ouverture est au-dessus de la roue du dispositif dit HVAC).

Cette circulation d'air entre l'intérieur de la volute et le logement permet de venir au contact du module de commande lorsque celui-ci est installé dans le logement et ainsi le maintenir à une température de fonctionnement acceptable.

Un joint peut être formé au niveau de l'ouverture en regard du logement, le joint étant apte à assurer une étanchéité lorsque le module est installé dans ledit logement.

Ce joint permet d'éviter des pertes de charge trop importantes au sein du dispositif HVAC lors de son fonctionnement. Le joint peut être formé en SEBS. Par exemple, le joint peut être comprimé entre le module et les bords de l'ouverture lorsque le module est installé dans le logement.

En outre, le système comprend un dissipateur thermique en regard du logement apte à permettre une transmission de chaleur entre un intérieur de la volute et ledit logement, ledit dissipateur comprenant un matériau de conductance thermique plus élevée qu'un matériau principal dudit support moteur.

Le dissipateur thermique peut ainsi être sur une paroi du logement ou être, en lui-même, la paroi du logement.

Ce dissipateur thermique peut faciliter le maintien de la température de fonctionnement du module de commande à un niveau acceptable.

Le système peut comprendre une roue adaptée pour être installée dans la volute. Le logement peut alors être situé à un aplomb de la roue selon un axe de rotation de la roue.

Le fait que le logement se situe à l'aplomb de la roue permet d'obtenir un système compact n'excédant pas la taille habituelle des dispositifs de type HVAC tout en garantissant une installation simple.

En outre, une direction principale dudit module est colinéaire à un axe de rotation du moteur.

La direction principale du module est une direction orientée selon la plus grande dimension du module (ex. si le module est parallélépipédique, la direction principale est orientée selon la longueur du parallélépipède).

Cette orientation permet d'obtenir un système compact (le module étant alors vertical) tout en conservant un système de blocage par « quart de tour ».

Par ailleurs, ledit support-moteur peut être apte à être tourné au moins partiellement dans ladite ouverture pour fixation.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une réalisation particulière de l'art antérieur d'un système pour dispositif de chauffage, de ventilation et/ou de climatisation d'un véhicule ;
- les figures 2(a) à 2(d) illustrent un même système pour un dispositif de chauffage, de ventilation ou de climatisation d'un véhicule dans un mode de réalisation selon l'invention selon différentes vues et représentations ;
- les figures 3(a) à 3(d) illustrent différentes solutions possibles pour le logement pour module de commande dans le dispositif de chauffage, de ventilation ou de climatisation d'un véhicule.

Comme indiqué précédemment, la figure 1 illustre une réalisation particulière de l'art antérieur de dispositif de type HVAC.

Ce dispositif comprend, un moteur (masqué ici par un capot moteur 103), un module de commande 101 permettant de commander le moteur et fixé, dans cet exemple, sur le support moteur 102.

La roue 104 est entrainée par le moteur et permet alors de mettre en mouvement de l'air dans une volute (non représenté ici) du dispositif HVAC.

Dans cet exemple, le support moteur 102 n'est pas circulaire du fait de la présence du module de commande 101 : lorsqu'il est installé dans une ouverture complémentaire créée dans la volute, il ne peut donc pas tourner dans ladite ouverture. Un système de blocage dit « quart de tour » n'est donc pas possible dans cette mise en œuvre de la figure 1.

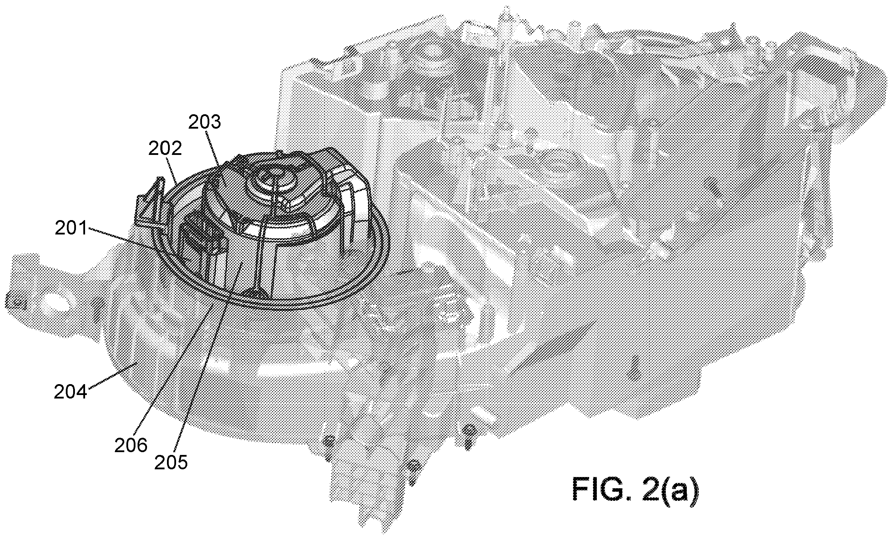

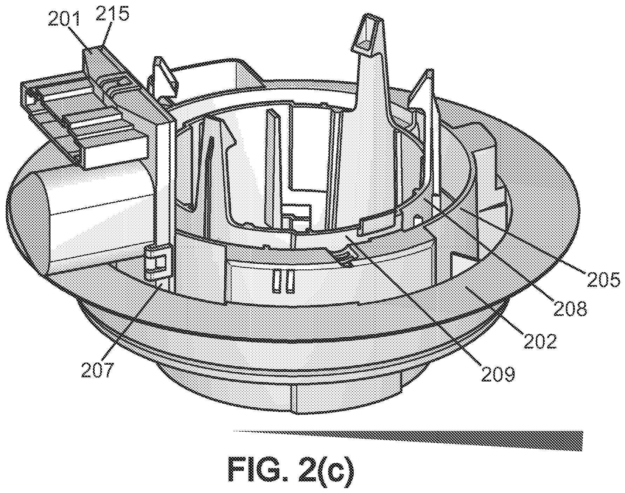

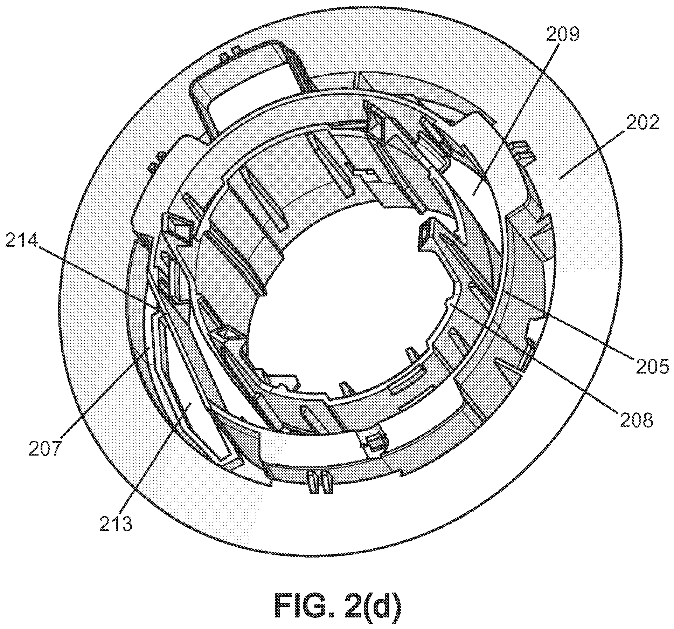

Les figures 2(a) à 2(d) illustrent un même système pour un dispositif de type HVAC d'un véhicule dans un mode de réalisation selon l'invention selon différentes vues et représentations.

Dans la figure 2(a), le système de l'invention est installé dans un ensemble plus important permettant une ventilation, une climatisation ou un chauffage du véhicule.

Ce système comporte un moteur 210 protégé par un support moteur. Le moteur 210 peut entrainer via un arbre moteur 212 une roue 211 qui met en mouvement l'air dans la volute 204 du dispositif HVAC.

Le support moteur est composé notamment d'un capot moteur 203, d'une bague intérieure 208 et d'une bague extérieure 205.

Le moteur 210 est fixé à la bague intérieure 208. L'espace 209 entre la bague intérieure 208 et la bague extérieure 205 peut être en totalité ou en partie remplit d'un matériau absorbant les vibrations induites par le moteur, ledit matériau pouvant être notamment du SEBS (polystyrène-b-poly(éthylène-butylène)- b-polystyrène).

La bague extérieure peut comporter une surface d'appui 202 à la périphérie du support moteur permettant de venir au contact avec la volute 204 du dispositif HVAC. La volute peut avoir une ouverture, par exemple circulaire, dans lequel le système décrit précédemment vient se positionner : une fois le système positionné dans cette ouverture, la surface d'appui 202 vient en contact avec une partie verticale 206 de la volute.

Le contact entre la volute et le support moteur est avantageusement un contact étanche réalisé, par exemple, au moyen d'un joint (ex. en SEBS). Il est également possible de prévoir que la déformation de la bague extérieure assure l'étanchéité. Le SEBS entre la bague intérieure et la bague extérieure permet alors de découpler les vibrations du moteur, et assurer l'étanchéité entre ces deux bagues.

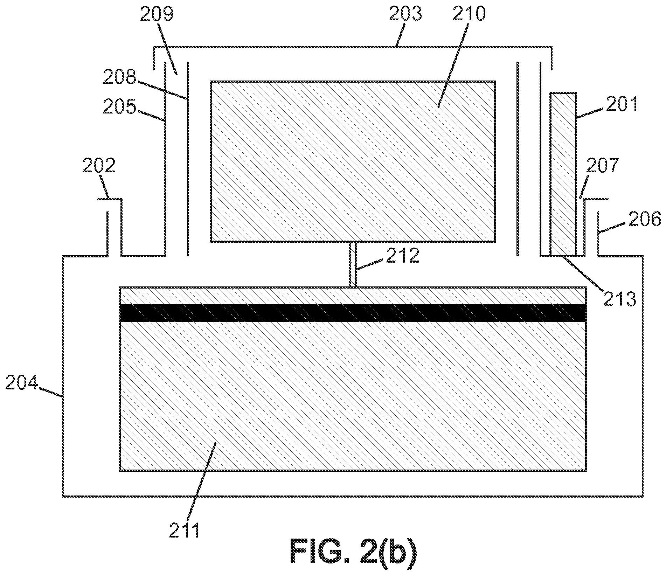

Pour des considérations aérauliques, la hauteur de la partie verticale 206 est souvent sensiblement égale à la distance maximale entre la surface 202 et la partie la plus « basse » du support moteur (dans l'hypothèse où le moteur 210 se situe dans une partie « haute » de la figure 2(b) et que la roue 211 se situe dans une partie « basse » de la figure 2(b)).

La bague extérieure peut également comporter des crochets ou des baïonnettes aptes à venir se bloquer dans la partie verticale 206 lorsque le support moteur réalise une rotation partielle dans la volute (système de blocage par baïonnettes ou système de blocage « quart de tour »).

Le plus souvent, la bague extérieure 205 peut comporter un renfoncement en périphérie du support moteur. On peut également parler de « la gorge de la bague extérieure du support moteur ».

Il est ainsi possible de prévoir un logement 207 pour le module de commande 201 du moteur au niveau de ce renfoncement circulaire.

Ainsi, le logement est formé entre la bague extérieure 205 entourant le moteur et la surface d'appui 202 : le module de commande est alors fixé entre ces deux éléments, sur le support moteur, sans que la forme générale circulaire du support moteur en soit modifiée. La forme générale circulaire du support moteur (au niveau de son contact avec la volute) permet une rotation de ce support moteur dans la volute afin d'engager les baïonnettes (par exemple).

Avantageusement, le module de commande 201 vient au contact du support moteur au sein du logement 207. Par exemple, une ouverture 213 (ex. complémentaire avec une section du module de commande 201) peut être formée dans le logement 207. Ainsi, le module de commande 201 vient se fixer dans cette ouverture 213, facilitant ainsi son positionnement lors du montage.

Par ailleurs, l'ouverture 213 en regard du logement 207 permet à l'air en mouvement dans la volute de venir au contact du module de commande 201 et ainsi permet de refroidir le module de commande 201.

Bien entendu, le module de commande peut également comporter des trous afin de faciliter la circulation d'air en provenance de la volute jusqu'aux composants électroniques les plus éloignés du module de commande 201 : ces trous sont, par exemple, en regard de l'ouverture 213. Bien entendu, pour des raisons d'humidité, les composants électroniques peuvent être protégés (ex. vernis, plaque de protection) vis-à-vis du flux d'air.

Le contact entre le module de commande 201 et le logement 207 permet d'assurer une étanchéité de l'ouverture 213 : ce contact peut se faire au niveau de l'ouverture (ex. sur les bords de l'ouverture 213) à l'aide d'un joint spécial, par exemple en SEBS.

Le logement 207 peut être de toute forme. En particulier, le logement 207 peut comprendre une surface plane 214 complémentaire d'une surface arrière 215 du module. La surface plane 214 (ou méplat) est située du côté opposé à la surface d'appui 202 par rapport au logement 207. Cette surface plane 214 permet à la carte (le plus souvent rigide) du module de commande d'être la plus grande possible (en étant proche de la surface arrière 215 du module 201) : cette surface permet en effet d'approcher le module de l'axe de révolution du support moteur et ainsi d'agrandir la largeur du circuit imprimé utilisé au sein du module de commande.

Bien entendu, il est possible que la surface arrière 215 du module soit de toute forme, notamment si la carte du module est une carte souple.

Lors de sa fixation sur le support moteur, le module 201 peut être guidé dans le fond de la gorge (i.e. dans le fond du logement 207, ici) du support moteur et verrouillé par le capot moteur.

Un système de guidage provenant du capot moteur peut permettre de positionner le module en partie haute, et peut assurer le bridage du module avec le support moteur. Ce système de guidage peut également permettre d'assurer le maintien radial lors des phases de connexion et déconnexion du support moteur.

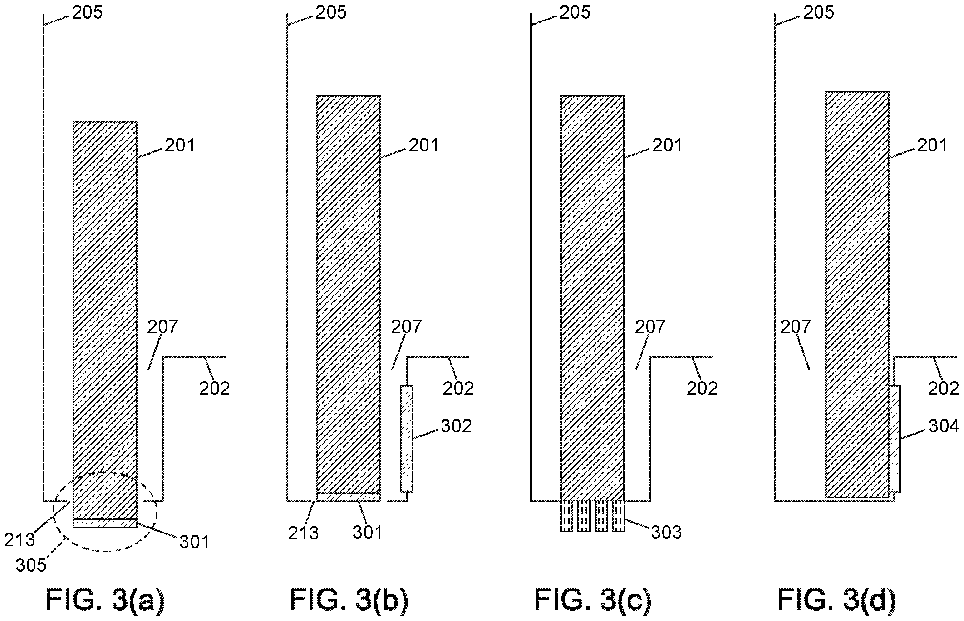

Les figures 3(a) à 3(d) illustrent différentes solutions possibles pour le logement pour module de commande dans le dispositif de type HVAC.

Dans la figure 3(a), le module de commande 201 est fixé dans le logement 207 de telle sorte qu'une partie du module de commande forme saillie (zone 305) par rapport à l'ouverture 213. Ainsi, une partie du module (zone 305) peut se trouver dans la circulation d'air de la volute et permettre au module d'être refroidit efficacement.

Optionnellement, il est possible de prévoir un dissipateur de chaleur telle qu'une plaque métallique 301 (plus généralement, plaque de conductance thermique plus élevée que le matériau principal du support moteur ou du module) sur la surface basse du module de commande 201 afin de faciliter le refroidissement. Ce dissipateur est destiné à être dans le flux d'air de la volute lorsque le module est en place. Le module peut quant à lui tangenter le flux d'air.

Cette configuration permet un refroidissement performant du module de commande 201.

Dans la figure 3(b), le module de commande 201 est fixé dans le logement 207 de telle sorte que le module de commande est aligné avec la surface du support moteur délimitant l'ouverture 213. Ainsi, aucune saillie n'est formée dans la volute lorsque le module est fixé au support moteur et lorsque le support moteur est en place dans la volute.

Le fait qu'aucune saillie n'est formée permet d'éviter toute problématique acoustique ou aéraulique lors du fonctionnement du dispositif HVAC.

En effet, du fait de la compacité éventuelle du système de l'invention, il peut être souhaitable de positionner l'ouverture 213 au-dessus de la roue 211. La distance d'entrefer entre cette ouverture 213 et la roue 211 étant le plus souvent déterminée avec précision pour éviter des turbulences et des problématiques acoustiques, il peut convenir d'éviter d'introduire le module 201 en saillie dans la volute.

Il est également possible de prévoir, pour tout mode de réalisation, que certaines surfaces 302 du logement 207 soient formées d'un matériau (ex. matériau métallique) de conductance thermique plus élevée que le matériau principal du support moteur (ex. matériau synthétique).

Dans la figure 3(c), le module de commande 201 comporte des picots 303 formés dans un matériau (ex. matériau métallique) de conductance thermique plus élevée que le matériau principal du support moteur (ex. matériau synthétique). Ces picots peuvent également être formés dans un matériau identique au matériau principal du support moteur.

Ces picots, destinés à être dans le flux d'air de la volute lorsque le module est fixé au support moteur et lorsque le support moteur est en place dans la volute, permettent un refroidissement performant du module de commande 201.

Dans la figure 3(d), le logement ne comporte pas d'ouverture 213. En revanche, le module 201 est en contact avec une paroi du logement formée d'un matériau (ex. matériau métallique) de conductance thermique plus élevée que le matériau principal du support moteur (ex. matériau synthétique).

Bien entendu, les modes de réalisation des figures 3(a) à 3(d) ne sont pas exclusifs l'un de l'autre et peuvent être combinés en tout ou partie.

Bien entendu, la présente invention ne se limite pas aux formes de réalisation décrites ci-avant à titre d'exemples ; elle s'étend à d'autres variantes.

D'autres réalisations sont possibles.

## Revendications

1. Système pour dispositif de chauffage, de ventilation ou de climatisation d'un véhicule comportant :
- un moteur électrique (210) ;
- un support-moteur (208, 205, 203) fixé au moteur (210), ledit support-moteur étant apte à être installé dans une ouverture formée sur une volute (204) du dispositif de chauffage, de ventilation ou de climatisation ;
- un module de commande (201) dudit moteur électrique ;
dans lequel, le module de commande (201) est installé sur le support-moteur (208, 205, 203) dans un logement (207), ledit logement (207) étant formé entre une bague (205) dudit support-moteur (208, 205, 203) entourant le moteur (210) et une surface d'appui (202) dudit support moteur (208, 205, 203) reliée à la bague (205) et adaptée pour être en contact avec la volute,
**caractérisé en ce que**,
une direction principale dudit module de commande (201) est colinéaire à un axe de rotation du moteur (210) la direction principale du module de commande (201) étant une direction orientée selon la plus grande dimension du module de commande (201).

2. Système selon la revendication 1, dans lequel ledit logement (207) comprend une surface plane (214) complémentaire d'une surface arrière (215) du module (201), la surface plane (214) étant située du côté opposé à la surface d'appui (202) par rapport audit logement.

3. Système selon l'une des revendications précédentes, dans lequel la surface d'appui (202) est adaptée pour être en contact avec la volute (204) tout autour de l'ouverture.

4. Système selon l'une des revendications précédentes, dans lequel le support moteur (208, 205, 203) comprend des baïonnettes aptes à solidariser le support moteur avec la volute lors d'une rotation du support moteur (208, 205, 203) dans ladite ouverture.

5. Système selon l'une des revendications précédentes, dans lequel le logement (207) a une section complémentaire d'une section du module de commande (201).

6. Système selon l'une des revendications précédentes, dans lequel le support moteur (208, 205, 203) comprend une ouverture (213) en regard du logement apte à permettre une circulation d'air entre un intérieur de la volute (204) et ledit logement (207).

7. Système selon la revendication 6, dans lequel un joint est formé au niveau de l'ouverture en regard du logement (207), le joint étant apte à assurer une étanchéité lorsque le module est installé dans ledit logement.

8. Système selon l'une des revendications précédentes, dans lequel le système comprend un dissipateur thermique (301, 302, 303) en regard du logement (207) apte à permettre une transmission de chaleur entre un intérieur de la volute (204) et ledit logement (207), ledit dissipateur (301, 302, 303) comprenant un matériau de conductance thermique plus élevée qu'un matériau principal dudit support moteur.

9. Système selon l'une des revendications précédentes, dans lequel le système comprend une roue adaptée (211) pour être installée dans la volute (204) ;
dans lequel le logement est situé à un aplomb de la roue selon un axe de rotation de la roue (211).

10. Système selon l'une des revendications précédentes, dans lequel ledit support-moteur (208, 205, 203) est apte à être tourné au moins partiellement dans ladite ouverture pour fixation.

## Patentansprüche

1. System für eine Heizungs-, Lüftungs- oder Klimatisierungsvorrichtung eines Fahrzeugs, das aufweist:
- einen Elektromotor (210);
- einen am Motor (210) befestigten Motorträger (208, 205, 203), wobei der Motorträger in eine Öffnung eingebaut werden kann, die auf einem Spiralgehäuse (204) der Heizungs-, Lüftungs- oder Klimatisierungsvorrichtung ausgebildet ist;
- ein Steuermodul (201) des Elektromotors;
wobei das Steuermodul (201) auf dem Motorträger (208, 205, 203) in eine Aufnahme (207) eingebaut ist, wobei die Aufnahme (207) zwischen einem Ring (205) des Motorträgers (208, 205, 203), der den Motor (210) umgibt, und einer Auflagefläche (202) des Motorträgers (208, 205, 203) gebildet ist, die mit dem Ring (205) verbunden und geeignet ist, mit dem Spiralgehäuse in Kontakt zu sein,
**dadurch gekennzeichnet, dass** eine Hauptrichtung des Steuermoduls (201) zu einer Drehachse des Motors (210) kollinear ist, wobei die Hauptrichtung des Steuermoduls (201) eine gemäß der größten Abmessung des Steuermoduls (201) ausgerichtete Richtung ist.

2. System nach Anspruch 1, wobei die Aufnahme (207) eine ebene Fläche (214) komplementär zu einer hinteren Fläche (215) des Moduls (201) enthält, wobei die ebene Fläche (214) sich auf der Seite entgegengesetzt zur Auflagefläche (202) bezüglich der Aufnahme befindet.

3. System nach einem der vorhergehenden Ansprüche, wobei die Auflagefläche (202) geeignet ist, um mit dem Spiralgehäuse (204) um die ganze Öffnung herum in Kontakt zu sein.

4. System nach einem der vorhergehenden Ansprüche, wobei der Motorträger (208, 205, 203) Bajonette enthält, die den Motorträger bei einer Drehung des Motorträgers (208, 205, 203) in der Öffnung fest mit dem Spiralgehäuse verbinden können.

5. System nach einem der vorhergehenden Ansprüche, wobei die Aufnahme (207) einen zu einem Querschnitt des Steuermoduls (201) komplementären Querschnitt hat.

6. System nach einem der vorhergehenden Ansprüche, wobei der Motorträger (208, 205, 203) eine Öffnung (213) gegenüber der Aufnahme enthält, die eine Luftströmung zwischen einem Inneren des Spiralgehäuses (204) und der Aufnahme (207) erlauben kann.

7. System nach Anspruch 6, wobei eine Dichtung im Bereich der Öffnung gegenüber der Aufnahme (207) gebildet ist, wobei die Dichtung eine Dichtheit gewährleisten kann, wenn das Modul in die Aufnahme eingebaut ist.

8. System nach einem der vorhergehenden Ansprüche, wobei das System einen Wärmeableiter (301, 302, 303) gegenüber der Aufnahme (207) enthält, der eine Wärmeübertragung zwischen einem Inneren des Spiralgehäuses (204) und der Aufnahme (207) erlauben kann, wobei der Ableiter (301, 302, 303) ein Material mit einer höheren Wärmeleitfähigkeit als ein Hauptmaterial des Motorträgers enthält.

9. System nach einem der vorhergehenden Ansprüche, wobei das System ein geeignetes Rad (211) enthält, um in das Spiralgehäuse (204) eingebaut zu werden;
wobei die Aufnahme sich gemäß einer Drehachse des Rads (211) in Flucht mit dem Rad befindet.

10. System nach einem der vorhergehenden Ansprüche, wobei der Motorträger (208, 205, 203) zur Befestigung zumindest teilweise in der Öffnung gedreht werden kann.

## Claims

1. System for a heating, ventilation or air-conditioning device of a vehicle, comprising:
- an electric motor (210);
- a motor support (208, 205, 203)attached to the motor (210), wherein said motor support can be installed in an opening formed on a volute (204) of the heating , ventilation or air-conditioning device,
- a control module (201) of said electric motor; wherein the control module (201) is installed on the motor support (208, 205, 203) in a recess (207), said recess (207) being formed between a ring (205) of said motor support (208, 205, 203) surrounding the motor (210) and a bearing surface (202) of said motor support (208, 205, 203) connected to the ring (205) and adapted to be in contact with the volute,
**characterized in that**
a main direction of said control module (201) is colinear with an axis of rotation of the motor (210), the main direction of the control module (201) being a direction oriented along the largest dimension of the control module (201).

2. System according to Claim 1, wherein said recess (207) comprises a planar surface (214) that is complementary with a rear surface (215) of the module (201), the planar surface (214) being located on the opposite side of bearing surface (202) with respect to said recess.

3. System according to either of the preceding claims, wherein the bearing surface (202) is designed to be in contact with the volute (204) all around the opening.

4. System according to one of the preceding claims, wherein the motor support (208, 205, 203) comprises bayonets that are able to secure the motor support to the volute when the motor support (208, 205, 203) is rotated in said opening.

5. System according to one of the preceding claims, wherein the cross section of the recess (207) matches a cross section of the control module (201).

6. System according to one of the preceding claims, wherein the motor support (208, 205, 203) comprises an opening (213) facing the recess able to permit a flow of air between an interior of the volute (204) and said recess (207).

7. System according Claim 6, wherein a seal is formed at the opening facing the recess (207), the seal being able to ensure leaktightness when the module is installed in said recess.

8. System according to one of the preceding claims, wherein the system comprises a heat dissipator (301, 302, 303) facing the recess (207) able to permit a transmission of heat between an interior of the volute (204) and said recess (207), said dissipator (301, 302, 303) comprising a material the thermal conductivity of which is higher than that of a main material of said motor support.

9. System according to one of the preceding claims, wherein the system comprises a wheel (211) suitable to be installed in the volute (204);
wherein the recess is located vertically aligned with the wheel along an axis of rotation of the wheel (211) .

10. System according to one of the preceding claims, wherein said motor support (208, 205, 203) can be at least partially rotated in said opening for attachment.
